(19) Europäisches Patentamt
European Patent Office
Office européen des brevets

(11) EP 3 950 782 A1

(12) EUROPEAN PATENT APPLICATION
published in accordance with Art. 153(4) EPC

(43) Date of publication:
09.02.2022 Bulletin 2022/06

(21) Application number: 20783394.8

(22) Date of filing: 01.04.2020

(51) International Patent Classification (IPC):
*C08G 65/40* (2006.01) *C08G 75/23* (2006.01)

(52) Cooperative Patent Classification (CPC):
C08G 65/40; C08G 75/23

(86) International application number:
PCT/JP2020/015115

(87) International publication number:
WO 2020/204109 (08.10.2020 Gazette 2020/41)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 03.04.2019 JP 2019071412

(71) Applicant: SUMITOMO CHEMICAL COMPANY LIMITED
Chuo-ku
Tokyo 104-8260 (JP)

(72) Inventors:
- ITO Kazuyuki
Tsukuba-shi, Ibaraki 300-3294 (JP)
- YOKOZAKI Yuta
Niihama-shi, Ehime 792-8521 (JP)

(74) Representative: Vossius & Partner
Patentanwälte Rechtsanwälte mbB
Siebertstraße 3
81675 München (DE)

# (54) POLYBIPHENYL ETHER SULFONE RESIN, METHOD FOR PRODUCING SAME AND MOLDED ARTICLE OF SAME

(57) The present invention is a polybiphenyl ether sulfone resin substantially composed of a repeating structure of the following Formula (1), and when a test piece with a notch is molded by injection molding the polybiphenyl ether sulfone resin, an Izod impact value of the test piece with a notch after being subjected to heat treatment at 180°C for 48 hours, measured in accordance with ASTM D256, is 300 J/m or more.

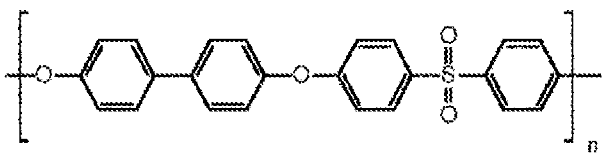
(1)

EP 3 950 782 A1

## Description

[Technical Field]

The present invention relates to a polybiphenyl ether sulfone resin, a method for producing the same, and a molded article of the same.

Priority is claimed on Japanese Patent Application No. 2019-071412, filed April 3, 2019, the content of which is incorporated herein by reference.

[Background Art]

A molded body of a polybiphenyl ether sulfone resin having a repeating unit represented by the following Formula (1-1) has excellent heat resistance, impact resistance, solvent resistance and the like. In addition, it is also known that the higher the molecular weight of a polybiphenyl ether sulfone resin, the better the heat resistance and impact resistance of the obtained molded body.

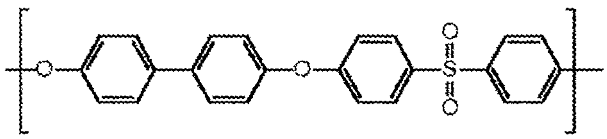

(1-1)

As a method for producing a polybiphenyl ether sulfone resin, for example, a method of polymerizing 4,4'-dihydroxybiphenyl and a 4,4'-dihalogenodiphenyl sulfone compound in an aprotic polar solvent in the presence of potassium carbonate is reported in Patent Documents 1 to 3 and the like.

[Citation List]

[Patent Documents]

Patent Document 1
Japanese Unexamined Patent Application, First Publication No. 2004-107606
Patent Document 2
Japanese Unexamined Patent Application, First Publication No. 2004-263154
Patent Document 3
Published Japanese Translation No. 2002-525406 of the PCT International Publication

[Summary of Invention]

[Technical Problem]

A molded body of a polybiphenyl ether sulfone resin having excellent heat resistance, impact resistance, solvent resistance is expected to be applied to applications used in a high-temperature atmosphere. However, the tensile elastic modulus when a polybiphenyl ether sulfone resin in the related art is molded into a film is not sufficient, and a polybiphenyl ether sulfone resin having a higher tensile elastic modulus when molded into a film is required.

An object of the present invention is to provide a polybiphenyl ether sulfone resin having an excellent tensile elastic modulus when molded into a film, a method for producing the same, and a molded article of the same.

[Solution to Problem]

In order to achieve the object, the present invention adopts the following configuration.

[1] A polybiphenyl ether sulfone resin substantially composed of a repeating structure of the following Formula (1), in which when the following test piece with a notch is molded by injection molding the polybiphenyl ether sulfone resin, an Izod impact value of the test piece with a notch after being subjected to heat treatment at 180°C for 48 hours, measured in accordance with ASTM D256, is 300 J/m or more.

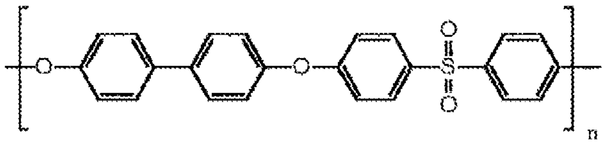 (1)

[In the formula, n represents an integer of 1 or more.]

<Test piece with a notch>

Length: 63.5 ± 2.0 mm
Thickness: 3.2 mm
Width: 12.6 mm
Remaining width: 9.9 mm

[2] A method for producing a polybiphenyl ether sulfone resin by a polycondensation reaction between a 4,4'-dihalogenodiphenyl sulfone compound and 4,4'-dihydroxybiphenyl in an aprotic polar solvent under a nitrogen atmosphere,
in which an oxygen concentration in a nitrogen gas introduced into the nitrogen atmosphere is 1,000 ppm or less in terms of volume with respect to the introduced gas.
[3] A molded article containing the polybiphenyl ether sulfone resin according to [1].

[Advantageous Effects of Invention]

The polybiphenyl ether sulfone resin of the present invention has an excellent tensile elastic modulus when molded into a film.

[Description of Embodiments]

Hereinafter, the present invention will be described in detail.

«Polybiphenyl ether sulfone Resin»

The polybiphenyl ether sulfone resin of the present invention substantially has a repeating structure of the following Formula (1).

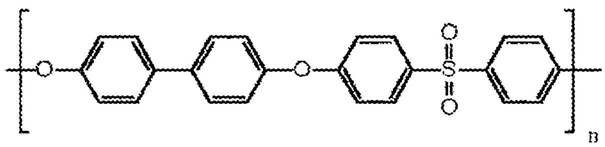 (1)

[In the formula, n represents an integer of 1 or more.]

The polybiphenyl ether sulfone resin of the present invention can be represented by, for example, the following Formula (1-2), Formula (1-3), or Formula (1-4). The polybiphenyl ether sulfone resin (1-2) represented by the following Formula (1-2) having a halogen atom at the end has a higher thermal decomposition temperature, is hardly colored, and has more excellent thermal stability than a polybiphenyl ether sulfone resin (1-3) represented by the following Formula (1-3) having a phenolic hydroxyl group at the end or a polybiphenyl ether sulfone resin (1-4) represented by the following Formula (1-4) having a methoxy group at the end.

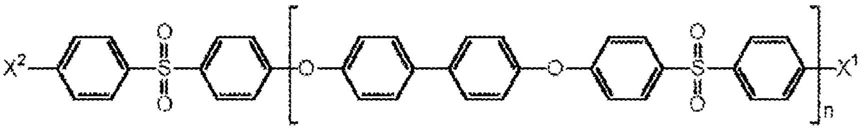 (1-2)

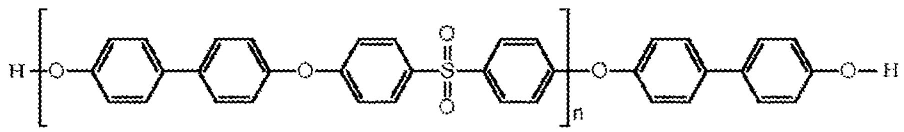 (1-3)

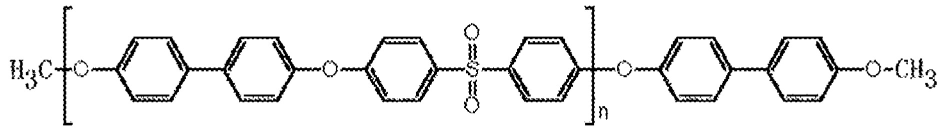 (1-4)

[In the formula, $X^1$ and $X^2$ each independently represents a halogen atom, and n represents an integer of 1 or more.]

In the present specification, "the polybiphenyl ether sulfone resin substantially includes a repeating structure of Formula (1)" means that the mass of the repeating structure of Formula (1) with respect to a total mass of the polybiphenyl ether sulfone resin is 90% by mass or more, and more preferably 95% by mass or more, and more specifically, 90% by mass or more and 100% by mass or less, and more preferably 95% by mass or more and 100% by mass or less.

Although n represents an integer of 1 or more, the polybiphenyl ether sulfone resin of the present invention is a mixture containing a compound in which n is an integer of 2 or more.

When the test piece with a notch is molded by injection molding the polybiphenyl ether sulfone resin of the present invention, an Izod impact value of the test piece with a notch after being subjected to heat treatment at 180°C for 48 hours, measured in accordance with ASTM D256, is 300 J/m or more. The Izod impact value is measured by <Impact resistance test of injection molded test piece> described later in accordance with ASTM D256 after placing the test piece with a notch prepared by the method described in <Preparation of Izod test piece by injection molding machine> described later in an oven at 180°C and leaving undisturbed for 48 hours.

The Izod impact value can be controlled to 300 J/m or more by adjusting the oxygen concentration in nitrogen gas introduced into the nitrogen atmosphere to 1,000 ppm or less in terms of volume with respect to the introduced gas in a polycondensation reaction. The Izod impact value is preferably 320 J/m or more, more preferably 340 J/m or more, and particularly preferably 380 J/m or more. The polybiphenyl ether sulfone resin can have an excellent tensile elastic modulus when molded into a film by setting the Izod impact value to be a lower limit value or more.

The polybiphenyl ether sulfone resin of the present invention preferably contains an aprotic polar solvent having a boiling point of 100°C or higher and 400°C or lower at 1 atmospheric pressure, and preferably contains 10 ppm or more and 2,500 ppm or less of an aprotic polar solvent, more preferably contains 50 ppm or more and 2,000 ppm or less of an aprotic polar solvent, and particularly preferably contains 100 ppm or more and 1,600 ppm or less of an aprotic polar solvent with respect to a total mass of the polybiphenyl ether sulfone resin. With this, it is possible to obtain a polybiphenyl ether sulfone resin capable of providing a molded article having excellent mechanical strength such as tensile elastic modulus, excellent impact resistance, and little change in impact resistance before and after thermal annealing, that is, a molded article resistant to thermal aging. Examples of the aprotic polar solvent include those described later. In addition, from the viewpoint of increasing the tensile strength of a press film obtained from the polybiphenyl ether sulfone resin, the content of the aprotic polar solvent is preferably 1,600 ppm or less, preferably 100 ppm or more and 1,600 ppm or less, and further more preferably 500 ppm or more and 1,500 ppm or less, with respect to the total mass of the polybiphenyl ether sulfone resin.

A reduced viscosity (RV) of the polybiphenyl ether sulfone resin of the present invention is preferably 0.35 or more and 0.65 or less, more preferably 0.40 or more and 0.60 or less, and particularly preferably 0.45 or more and 0.55 or less. By setting the value to be the lower limit value or more, it is possible to obtain excellent mechanical strength of the molded article obtained using the polybiphenyl ether sulfone resin, and by setting the value to be the lower limit value or less, it is possible to obtain preferable molding processability. The reduced viscosity (RV) of the polybiphenyl ether sulfone resin can be measured by a method described later.

The polybiphenyl ether sulfone resin of the present invention has the following aspects.

"1" A polybiphenyl ether sulfone resin having a substantially repeating structure of the following Formula (1), in which when the following test piece with a notch is molded by injection molding the polybiphenyl ether sulfone resin,

an Izod impact value of the test piece with a notch after being subjected to heat treatment at 180°C for 48 hours, measured in accordance with ASTM D256, is 300 J/m or more.

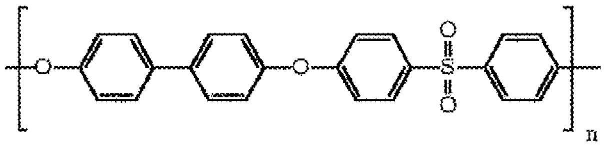
(1)

[In the formula, n represents an integer of 1 or more.]

<Test piece with a notch>

Length: 63.5 ± 2.0 mm
Thickness: 3.2 mm
Width: 12.6 mm
Remaining width: 9.9 min

"2" The polybiphenyl ether sulfone resin according to "1", containing 10 ppm or more and 2,500 ppm or less of an aprotic polar solvent having a boiling point of 100°C or higher and 400°C or lower at 1 atmospheric pressure with respect to a total mass of the polybiphenyl ether sulfone resin.

"3" The polybiphenyl ether sulfone resin according to "1" or "2", in which the polybiphenyl ether sulfone resin has a reduced viscosity (RV) of 0.35 or more and 0.65 or less measured by the following calculation method.

<Calculation method of reduced viscosity (RV) of polybiphenyl ether sulfone resin>

Approximately 1 g of polybiphenyl ether sulfone resin is dissolved in N, N-dimethylformamide, and the volume is set to 1 dL. The polybiphenyl ether sulfone resin solution is filtered through a 300-mesh wire mesh. A flow time (t) of the resin solution is measured at 25°C using an Ostwald type viscosity tube. In addition, a flow time (t0) of the solvent N, N-dimethylformamide is measured at 25°C using the same Ostwald type viscosity tube. A specific viscosity ($\eta r$) is calculated from the flow time (t) of the resin solution and the flow time (t0) of N, N-dimethylformamide based on the following formula. The reduced viscosity (RV) (unit: dL/g) of aromatic polysulfone is calculated by dividing the specific viscosity ($\eta r$) by a concentration (c) (unit: g/dL) of the polybiphenyl ether sulfone resin.

$$\eta r = (\eta - \eta 0)/\eta 0 = (t - t0)/t0$$

$$RV = \eta r/c$$

"4" The polybiphenyl ether sulfone resin according to any one of "1" to "3", in which when the test piece with a notch is molded by injection molding the polybiphenyl ether sulfone resin, the Izod impact value of the test piece with a notch before being subjected to heat treatment, measured in accordance with ASTM D256, is 400 to 1,800 J/m, preferably 450 to 1,500 J/m, more preferably 500 to 1,300 J/m, and further more preferably 560 to 1,000 J/m.

"5" The polybiphenyl ether sulfone resin according to any one of "1" to "4", in which when the test piece with a notch is molded by injection molding the polybiphenyl ether sulfone resin, the Izod impact value of the test piece with a notch after being subjected to heat treatment at 180°C for 48 hours, measured in accordance with ASTM D256, is 300 to 750 J/m, preferably 310 to 700 J/m, more preferably 320 to 650 J/m, and further more preferably 330 to 600 J/m.

"6" The polybiphenyl ether sulfone resin according to any one of "1" to "5", in which when an Izod test piece is prepared by the following press molding by press molding the polybiphenyl ether sulfone resin, the Izod impact value of the Izod test piece obtained by the press molding after heat treatment at 180°C for 48 hours, measured in accordance with ASTM D256, is 200 to 2,000 J/m, preferably 400 to 1,700 J/m, more preferably 600 to 1,500 J/m, and further more preferably 900 to 1,300 J/m.

<Izod test piece by press molding>

Length: 70 mm
Thickness: 2.8 mm
Width: 15 mm
Remaining width: 12.5 mm

"7" The polybiphenyl ether sulfone resin according to any one of "1" to "6", in which when a press film is molded by press molding the polybiphenyl ether sulfone resin, a tensile elastic modulus of the press film is 1.5 to 4.5 GPa, preferably 1.8 to 3.5 GPa, and more preferably 2.1 to 2.5 GPa.

«Method for producing polybiphenyl ether sulfone resin»

A method for producing a polybiphenyl ether sulfone resin of the present invention is a method for producing a polybiphenyl ether sulfone resin by a polycondensation reaction between a 4,4'-dihalogenodiphenyl sulfone compound and 4,4'-dihydroxybiphenyl in an aprotic polar solvent under a nitrogen atmosphere.

The 4,4'-dihalogenodiphenyl sulfone compound used in the method for producing a polybiphenyl ether sulfone resin is a compound represented by the following Formula (2).

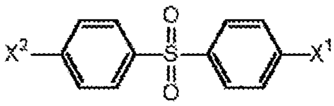

(2)

[In the formula, $X^1$ and $X^2$ each independently represents a halogen atom.]

In Formula (2), examples of the halogen atom represented by $X^1$ and $X^2$ include a fluorine atom, a chlorine atom, and a bromine atom. Examples of the 4,4'-dihalogenodiphenyl sulfone compound include 4,4'-difluorodiphenyl sulfone, 4,4'-dichlorodiphenyl sulfone, 4,4'-dibromodiphenyl sulfone, and the like.

4,4'-Dihydroxybiphenyl used in the present invention is a compound represented by Formula (3).

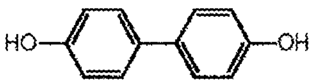

(3)

In an aspect of the present invention, a method for producing a polybiphenyl ether sulfone resin represented by the following Formula (1-2) can be shown by the following Reaction Formula (4) when polycondensing a 4,4'-dihalogenodiphenyl sulfone compound (2) as an excess using alkali metal carbonate.

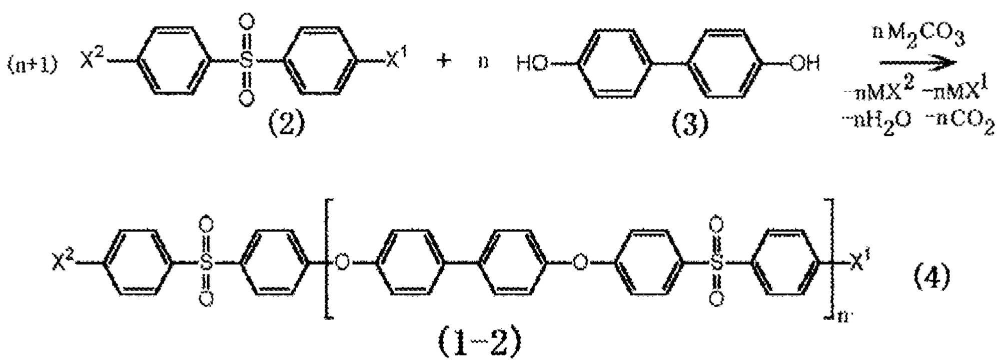


(4)

[In the formula, $X^1$ and $X^2$ have the same meanings as described above, M represents an alkali metal, and n represents an integer of 1 or more.]

In the method for producing a polybiphenyl ether sulfone resin of the present invention, an oxygen concentration in the nitrogen gas introduced into the nitrogen atmosphere is 1,000 ppm or less in terms of volume with respect to the

introduced gas. The oxygen concentration is preferably 800 ppm or less, more preferably 600 ppm or less, and particularly preferably 400 ppm or less. It is considered that by setting the oxygen concentration to be the upper limit value or less, there is a little concern that a byproduct occurs in the obtained polybiphenyl ether sulfone resin, and as a result, the tensile elastic modulus when molded into a film is excellent.

The oxygen concentration in the nitrogen gas introduced into the nitrogen atmosphere can be measured in terms of volume with respect to the introduced gas using a commercially available oxygen gas sensor such as a diaphragm galvanic cell type or a zirconia concentration cell type.

A lower limit of the oxygen concentration is not particularly limited, but may be 150 ppm, may be 100 ppm, or may be 80 ppm. The lower limit value and the upper limit value can be optionally combined. For example, the oxygen concentration is preferably 80 ppm or more and 1,000 ppm or less, more preferably 100 ppm or more and 800 ppm or less, and particularly preferably 150 ppm or more and 600 ppm or less in terms of volume with respect to the introduced gas.

In the method for producing a polybiphenyl ether sulfone resin of the present invention, a calculated mass A of the polybiphenyl ether sulfone resin to be obtained by the polycondensation reaction and a charged mass B of the aprotic polar solvent preferably satisfy the following Formula (5).

$$35 \leq A \times 100/(A + B) \leq 52 \quad (5)$$

In a case where the charged molar number of the 4,4'-dihalogenodiphenyl sulfone compound (2) is equal to or more than the charged molar number of 4,4'-dihydroxybiphenyl (3) (for example, 1 to 1.10 mol, and preferably 1.02 to 1.05 mol of the 4,4'-dihalogenodiphenyl sulfone compound (2) is used with respect to 1 mol of 4,4'-dihydroxybiphenyl (3)), the calculated mass A of polybiphenyl ether sulfone resin (1-2) represented by Formula (1-2), obtained by the polycondensation reaction, can be obtained by subtracting the mass of hydrogen halides ($HX^1$, $HX^2$) corresponding to twice the molar number of the charged mass of 4,4'-dihydroxybiphenyl (3) from the sum of the charged mass of the 4,4'-dihalogenodiphenyl sulfone compound (2) and the charged mass of the 4,4'-dihydroxybiphenyl (3) in Reaction Formula (4). Here, in a case where the halogen atoms $X^1$ and $X^2$ are different from each other, the subtracted mass is the sum of the mass of hydrogen halide ($HX^1$) corresponding to the molar number equal to the charged mass of 4,4'-dihydroxybiphenyl (3) and the mass of hydrogen halide ($HX^2$) corresponding to the molar number equal to the charged mass of 4,4'-dihydroxybiphenyl (3).

In a case where the charged molar number of the 4,4'-dihalogenodiphenyl sulfone compound (2) is less than the charged molar number of the 4,4'-dihydroxybiphenyl (3) (for example, in a case where 0.90 to 1 mol, and preferably 0.95 to 0.98 moles of the 4,4'-dihalogenodiphenyl sulfone compound (2) is used with respect to 1 mol of the 4,4'-dihydroxybiphenyl (3)), a polybiphenyl ether sulfone resin (1-3) represented by Formula (1-3) is obtained by the same polycondensation reaction as that of Reaction Formula (4). In addition, the polybiphenyl ether sulfone resin (1-3) is reacted with methyl halide to obtain a polybiphenyl ether sulfone resin (1-4) represented by Formula (1-4). A calculated mass A of the polybiphenyl ether sulfone resin (1-3) represented by Formula (1-3) and the polybiphenyl ether sulfone resin (1-4) represented by Formula (1-4), obtained by the polycondensation reaction, can be obtained by subtracting the mass of hydrogen halides ($HX^1$, $HX^2$) corresponding to twice the molar number of the charged mass of the 4,4'-dihalogenodiphenyl sulfone compound (2) from the sum of the charged mass of the 4,4'-dihalogenodiphenyl sulfone compound (2) and the charged mass of the 4,4'-dihydroxybiphenyl (3). Here, in a case where the halogen atoms $X^1$ and $X^2$ are different from each other, the subtracted mass is the sum of the mass of hydrogen halide ($HX^1$) corresponding to the molar number equal to the charged mass of the 4,4'-dihalogenodiphenyl sulfone compound (2) and the mass of hydrogen halide ($HX^2$) corresponding to the molar number equal to the charged mass of the 4,4'-dihalogenodiphenyl sulfone compound (2).

In the method for producing a polybiphenyl ether sulfone resin of the present invention, a polymerization concentration defined by [A x 100 ÷ (A + B)] is preferably 35% or more and 52% or less. The polymerization concentration is preferably 47% or less, and more preferably 46% or less. By setting the polymerization concentration to be the upper limit value or less, it is possible to obtain a molded article of a polybiphenyl ether sulfone resin having a small decrease in impact resistance before and after thermal annealing. The polymerization concentration is preferably 37% or more, more preferably 39% or more, and particularly preferably 41 % or more. By setting the polymerization concentration to be the lower limit value or more, it is possible to perform polycondensation reaction efficiently in a short time. The upper limit value and the lower limit value can be optionally combined. For example, the polymerization concentration is preferably 37% or more and 47% or less, more preferably 39% or more and 46% or less, and particularly preferably 41% or more and 46% or less.

Although the polycondensation reaction is performed in an aprotic polar solvent, it is not a homogeneous reaction but a reaction in a slurry state. Therefore, in the structure of the reaction product between polymer molecules of polybiphenyl ether sulfone resin, if the polymerization concentration defined by [A × 100 ÷ (A + B)] is different, even if the mass-average molecular weight Mw and the polydispersity Mw/Mn are the same, it is considered that the entanglement of polymer molecules is different. Then, it is considered that it is possible to obtain a polybiphenyl ether sulfone resin capable of providing a molded article having excellent impact resistance and little change in impact resistance before and after thermal annealing, that is, a molded article resistant to thermal aging.

A use amount of the 4,4'-dihalogenodiphenyl sulfone compound (2) is usually 0.90 to 1.10 mol or 0.95 to 1.05 mol, and preferably approximately 0.95 to 0.98 mol or 0.96 to 0.98 mol, or 1.02 to 1.05 mol or 1.02 to 1.04 mol with respect to 1 mol of 4,4'-dihydroxybiphenyl (3). If the use amount is 0.95 or more and 1.05 mol or less, the molecular weight of the obtained polybiphenyl ether sulfone resin tends to be high, which is preferable.

In the method for producing a polybiphenyl ether sulfone resin, an alkali metal carbonate and/or an alkali metal bicarbonate can be used as a base. For example, examples of the alkali metal carbonate include potassium carbonate and sodium carbonate, examples of the alkali metal bicarbonate include potassium hydrogen carbonate and sodium hydrogen carbonate, and potassium carbonate is usually used.

In addition, alkali metal carbonate and/or alkali metal bicarbonate powders are preferably used as the base.

A use amount of alkali metal carbonate and/or alkali metal bicarbonate is usually 1 mol or more and 1.2 mol or less with respect to 1 mol of 4,4'-dihydroxybiphenyl (3), but may be 1.01 mol or more and 1.15 mol or less, and may be 1.02 mol or more and 1.15 mol or less.

Examples of the aprotic polar solvent used in the present invention include a sulfone solvent, an amide solvent or lactone solvent, a sulfoxide solvent, an organic phosphorus solvent, a cellosolve solvent, and the like. Examples of the sulfone solvent include diphenyl sulfone, dimethyl sulfone, diethyl sulfone, sulfolane, and the like. Examples of the amide solvent include N, N-dimethylacetamide, N-methyl-pyrrolidone, N-methylcaprolactam, N, N-dimethylformamide, N, N-diethylformamide, N, N-diethylacetamide, N-methylpropionamide, dimethylimidazolidinone, and the like. Examples of the lactone solvent include γ-butyl lactone, β-butyl lactone, and the like. Examples of the sulfoxide solvent include dimethyl sulfoxide, methylphenyl sulfoxide, and the like. Examples of the organic phosphorus solvent include tetramethylphosphoric amide, hexamethylphosphoric amide, and the like. Examples of the cellosolve solvent include ethyl cellosolve acetate, methyl cellosolve acetate, and the like.

As the aprotic polar solvent used in the present invention, a sulfone solvent is preferable, and diphenyl sulfone is more preferable.

The temperature of the polycondensation reaction is preferably 180°C to 300°C, and more preferably 240°C to 300°C. When the temperature is 240°C or higher, a reaction rate of polymerization tends to increase, which is preferable, and when the temperature is 300°C or lower, the molecular weight dispersion of the obtained polybiphenyl ether sulfone resin tends to decrease, which is preferable. The time required for the polycondensation reaction is usually approximately 3 to 20 hours, and preferably 5 to 10 hours from the viewpoint of improving production efficiency and suppressing changes in impact resistance after thermal annealing of the polybiphenyl ether sulfone resin.

Thus, the polycondensation reaction proceeds, and in order to obtain a polybiphenyl ether sulfone resin from a reaction mixture after the reaction, for example, the reaction mixture after the reaction may be solidified, powdered, and then washed with a solvent. In order to solidify the reaction mixture after the reaction, the reaction mixture may be cooled, and can be solidified by cooling to about room temperature. To make the solidified reaction mixture into powders, the reaction mixture may be pulverized. As the solvent used for washing, an alkali metal salt such as an alkali metal halide generated by polymerization and a solvent capable of dissolving an aprotic polar solvent without dissolving the polybiphenyl ether sulfone resin are used, and, for example, water, an aliphatic ketone such as acetone and methyl ethyl ketone, an aliphatic alcohol such as methanol, ethanol, and isopropanol, or a mixed solvent thereof can be used.

The method for producing a polybiphenyl ether sulfone resin of the present invention has the following aspects.

"51" A method for producing the polybiphenyl ether sulfone resin according to any one of "1" to "7" by polycondensation reaction between a 4,4'-dihalogenodiphenyl sulfone compound (2) represented by Formula (2) and 4,4'-dihydroxybiphenyl under a nitrogen atmosphere in an aprotic polar solvent, in which an oxygen concentration in the nitrogen gas introduced into the nitrogen atmosphere is 1,000 ppm or less in terms of volume with respect to the introduced gas.

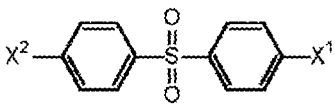

(2)

[In the formula, $X^1$ and $X^2$ each independently represents a halogen atom.]

"52" The method for producing a polybiphenyl ether sulfone resin according to "51", in which the oxygen concentration in the nitrogen gas is 80 ppm or more.

"53" The method for producing a polybiphenyl ether sulfone resin according to "51" or "52", in which a calculated mass A of a polybiphenyl ether sulfone resin to be obtained by the polycondensation reaction and a charged mass B of the aprotic polar solvent satisfy the following Formula (5).

$$35 \leq A \times 100/(A + B) \leq 52 \quad (5)$$

In a case where the charged molar number of the 4,4'-dihalogenodiphenyl sulfone compound (2) is equal to or more than the charged molar number of the 4,4'-dihydroxybiphenyl, the mass A is obtained by subtracting the mass of hydrogen halides ($HX^1$, HX2) corresponding to twice the molar number of the charged mass of the 4,4'-dihalogenodiphenyl from the sum of the charged mass of the 4,4'-dihydroxybiphenyl sulfone compound (2) and the charged mass of the 4,4'-dihydroxybiphenyl. $X^1$ and $X^2$ are the same as described above.

In a case where the charged molar number of the 4,4'-dihalogenodiphenyl sulfone compound (2) is less than the charged molar number of the 4,4'-dihydroxybiphenyl, the mass A is obtained by subtracting the mass of hydrogen halides ($HX^1$, $HX^2$) corresponding to twice the molar number of the charged mass of the 4,4'-dihalogenodiphenyl sulfone compound (2) from the sum of the charged mass of the 4,4'-dihalogenodiphenyl sulfone compound (2) and the charged mass of the 4,4'-dihydroxybiphenyl. $X^1$ and $X^2$ are the same as described above.

"54" The method for producing a polybiphenyl ether sulfone resin according to "53", in which the polymerization concentration defined by A x 100/(A + B) is 47% or less.

"55" The method for producing a polybiphenyl ether sulfone resin according to "53" or "54", in which the polymerization concentration defined by A $\times$ 100/(A + B) is 37% or more.

"56" The method for producing a polybiphenyl ether sulfone resin according to any one of "51" to "55", in which a blending ratio of the 4,4'-dihalogenodiphenyl sulfone compound (2) is 0.95 to 1.05 mol, and preferably 0.96 to 0.98 mol or 1.02 to 1.04 mol with respect to 1 mol of the 4,4'-dihydroxybiphenyl.

«Molded article»

A molded article of the present invention contains the polybiphenyl ether sulfone resin of the present invention. The molded article of the present invention may be a molded article obtained by molding the polybiphenyl ether sulfone resin of the present invention. A shape of the molded article of the present invention may be a powder shape, may be a pellet shape, may be a film or a sheet, may be an extruded long molded article, or may be an injection molded article. The polybiphenyl ether sulfone resin can be obtained as a film or a sheet by hot pressing, can be obtained as a long molded article by extrusion molding, can be obtained by molding a film by T-die molding, can be obtained by molding a hollow article such as various containers, building materials, and sporting goods by blow molding, and can be obtained as an injection molded article by injection molding, for example. The injection molded article can be produced by injection molding the polybiphenyl ether sulfone resin at a mold temperature of 120°C to 180°C, at a resin melting temperature of 330°C to 380°C using a general injection molding machine, for example. Since the molded article of the present invention is made using the polybiphenyl ether sulfone resin of the present invention, it has excellent mechanical strength, particularly tensile elastic modulus.

(Izod impact value of injection molded test piece)

As a molded article of the present invention, an Izod impact value of a test piece with a notch (hereinafter, referred to as an injection molded test piece) prepared from the polybiphenyl ether sulfone resin by the method described in <Preparation of Izod test piece by injection molding machine> described later can be set to 400 to 1,800 J/m, can be set to 450 to 1,500 J/m, can be set to 500 to 1,300 J/m, and can be set to 560 to 1,000 J/m.

An injection molded test piece may be produced using powders obtained by freeze-pulverizing the molded article of the present invention with a freeze-pulverizer and used for evaluation of the Izod impact value.

As a molded article of the present invention, an Izod impact value after thermal annealing by placing a test piece with a notch (that is, an injection molded test piece) prepared from the polybiphenyl ether sulfone resin by the method described in <Preparation of Izod test piece by injection molding machine> described later in an oven at 180°C and leaving therein for 48 hours may be 300 to 750 J/m, preferably 310 to 700 J/m, more preferably 320 to 650 J/m, and particularly preferably 330 to 600 J/m.

As a molded article of the present invention, an Izod impact value after thermal annealing by placing a test piece with a notch (that is, an injection molded test piece) prepared from the polybiphenyl ether sulfone resin by the method described in <Preparation of Izod test piece by injection molding machine> described later in an oven at 180°C and leaving therein for 72 hours may be 250 to 750 J/m, preferably 280 to 700 J/m, more preferably 300 to 650 J/m, and particularly preferably 330 to 600 J/m.

The Izod impact value [J/m] is measured by <Impact resistance test of injection molded test piece> described later in accordance with ASTM D256 on a test piece with a notch having a length of 63.5 $\pm$ 2.0 mm, a thickness of 3.2 mm, a width of 12.6 mm, a remaining width of 9.9 mm, a tip radius of 0.25 mm at the center, and a depth of 2.7 mm prepared by the method described in <Preparation of Izod test piece by injection molding machine> described later.

(Izod impact value of press molded test piece)

As the molded article of the present invention, the Izod impact value of the press molded test piece obtained from the polybiphenyl ether sulfone resin can be 200 to 2,000 J/m, can be 400 to 1,700 J/m, can be 600 to 1,500 J/m, and can be 900 to 1,300 J/m.

A press molded test piece is produced using powders obtained by freeze-pulverizing the molded article of the present invention with a freeze-pulverizer and used for evaluation of the Izod impact value.

As a molded article of the present invention, the Izod impact value after thermal annealing by placing a press molded test piece obtained from the polybiphenyl ether sulfone resin in an oven at 180°C and leaving therein for 48 hours can be 200 to 2,000 J/m, can be 400 to 1,700 J/m, can be 600 to 1,500 J/m, and can be 900 to 1,300 J/m.

The Izod impact value [J/m] of the press molded test piece is measured by <Impact resistance test of press molded test piece> described later in accordance with ASTM D256 on a test piece with a notch having a length of 70 mm, a width of 15 mm, a remaining width of 12.5 mm, a thickness of 2.8 mm, a tip radius of 0.25 mm, and a depth of 2.5 mm prepared by the method described in <Preparation of Izod test piece by press molding> described later.

(Tensile elastic modulus of press film)

As the molded article of the present invention, the tensile elastic modulus of a press film obtained from the polybiphenyl ether sulfone resin can be 1.5 to 4.5 GPa, can be 1.8 to 3.5 GPa, and can be 2.1 to 2.5 GPa. The tensile elastic modulus when the polybiphenyl ether sulfone resin of the present invention is molded into a film is excellent.

The press film is produced using powders obtained by freeze-pulverizing the molded article of the present invention with a freeze-pulverizer and used for evaluation of the tensile elastic modulus.

In addition, as the molded article of the present invention, the tensile strength of the press film obtained from the polybiphenyl ether sulfone resin can be 70 to 90 MPa, and can be 70 to 80 MPa. The tensile strength when the polybiphenyl ether sulfone resin of the present invention is molded into a film can be maintained at a high value.

The molded article of the present invention and the method for producing the same have the following aspects.

"101" A molded article containing the polybiphenyl ether sulfone resin according to any one of "1" to "7".
"102" A molded article obtained by molding the polybiphenyl ether sulfone resin according to any one of "1" to "7".
"103" A method for producing a molded article, the method including molding the polybiphenyl ether sulfone resin according to any one of "1" to "7".

[Examples]

Hereinafter, the present invention will be described in more detail with reference to specific examples. However, the present invention is not limited to the examples shown below.

<Calculation of reduced viscosity (RV) of polybiphenyl ether sulfone resin>

Approximately 1 g of polybiphenyl ether sulfone resin was dissolved in N, N-dimethylformamide, and the volume was set to 1 dL. The polybiphenyl ether sulfone resin solution was filtered through a 300-mesh wire mesh. A flow time (t) of the resin solution was measured at 25°C using an Ostwald type viscosity tube. In addition, a flow time (t0) of the solvent N, N-dimethylformamide was measured at 25°C using an Ostwald type viscosity tube. From the flow time (t) of the resin solution and the flow time (t0) of N, N-dimethylformamide, a specific viscosity (ηr) was calculated based on the following formula. By dividing the specific viscosity (ηr) by a concentration (c) (unit: g/dL) of the polybiphenyl ether sulfone resin, a reduced viscosity (RV) of aromatic polysulfone (unit: dL/g) was calculated.

$$\eta r = (\eta - \eta 0)/\eta 0 = (t - t0)/t0$$

$$RV = \eta r/c$$

<Measurement of residual diphenyl sulfone amount>

Approximately 1 g of a polybiphenyl ether sulfone resin was precisely weighed and added to a mixed solvent of acetone: methanol = 6 mL: 4 mL. The mixture was stirred at room temperature for 1 hour to extract the diphenyl sulfone in the resin particles into a mixed solvent, and the diphenyl sulfone in the mixed solvent was quantified by gas

chromatography.

<Preparation of Izod test piece by injection molding machine>

A polybiphenyl ether sulfone resin was granulated at a cylinder temperature of 360°C using a twin-screw extruder (PCM30, Ikegai Corp.) to prepare pellets made of a target composition. The obtained pellets were injection molded using an injection molding machine (PS40E5ASE, Nissei Plastic Industrial Co., Ltd.) under conditions of a cylinder temperature of 375°C, a mold temperature of 150°C, and an injection rate of 60 mm/s to mold a test piece (hereinafter, referred to as an injection molded test piece) with a notch having a length of 63.2 mm, a thickness of 3.2 mm, a width of 12.6 mm, a remaining width of 9.9 mm, a tip radius of 0.25 mm at the center, and a depth of 2.7 mm.

<Impact resistance test of injection molded test piece>

The Izod impact value [J/m] was measured using an injection molded test piece.

In addition, one obtained by placing an injection molded test piece in an oven at 180°C and leaving therein for 48 hours, and one obtained by leaving therein for 72 hours were prepared and used as injection molded test pieces after thermal annealing, and similarly, the Izod impact value [J/m] was measured in accordance with ASTM D256. The measurement was performed on each of 5 samples, and an average value was obtained as the Izod impact value. At this time, the number of brittle fractures out of 5 samples was recorded.

<Preparation of Izod test piece by press molding>

A polybiphenyl ether sulfone resin to be measured was placed in a gap portion of a spacer made of SUS having a thickness of 3 mm and sandwiched between a pair of aluminum flat plates. In addition, the entirety was sandwiched between a pair of steel flat plates, preheated at 305°C for 13 minutes in a hot press, then the polybiphenyl ether sulfone resin was fused, and heated and compressed for 2 minutes under a sufficient pressure so as to have the same thickness as that of the spacer made of SUS. Subsequently, the resultant product was cooled by a cooling press set at 25°C to obtain a plate having a thickness of 2.8 mm. The obtained molded plate was cut into a test piece (hereinafter, referred to as press molded test piece) with a notch having a length of 70 mm, a width of 15 mm, a remaining width of 12.5 mm, a thickness of 2.8 mm, a tip radius of 0.25 mm, and a depth of 2.5 mm.

<Impact resistance test of press molded test piece>

The Izod impact value [J/m] was measured using a press molded test piece in accordance with ASTM D256. In addition, the press molded test piece was placed in an oven at 180°C and left for 48 hours, then used as a press molded test piece after thermal annealing, and the Izod impact value [J/m] was similarly measured in accordance with ASTM D256. The measurement was performed on each of three samples, and an average value was obtained as the Izod impact value.

<Preparation of press film>

A polybiphenyl ether sulfone resin and an aluminum spacer were sandwiched between a pair of aluminum flat plates. In addition, the entirety was sandwiched between a pair of steel flat plates, preheated at 305°C for 13 minutes in a hot press, then the polybiphenyl ether sulfone resin was fused, and heated and compressed for 2 minutes under a sufficient pressure so as to have the same thickness as that of the aluminum spacer. Subsequently, the resultant product was cooled by a cooling press set at 25°C to prepare a molded article as a press film having a thickness of approximately 0.2 mm.

<Tensile test of press film>

A test was performed at a test speed of 5 mm/min using a dumbbell type test piece in accordance with JIS K7127 (tensile test method for plastic film and sheet). A tensile elastic modulus (unit: GPa) and tensile strength (MPa) of the molded article as the above-described press film were measured in an atmosphere of 23°C and 50% humidity. The measurement was performed on each of three or two samples, and an average value was obtained.

<Oxygen concentration in nitrogen gas>

An oxygen concentration in the nitrogen gas introduced into the nitrogen atmosphere was measured in terms

of volume with respect to the introduced gas using an oxygen concentration meter LC-300 manufactured by Toray Engineering Co., Ltd.

<Production of polybiphenyl ether sulfone resin>

[Example 1]

In a polymerization tank equipped with a stirrer, a nitrogen introduction tube, a thermometer, and a capacitor with a receiver at the tip, 100.0 parts by mass (1 molar ratio) of biphenol, 157.3 parts by mass of bis(4-chlorophenyl) sulfone (1.020 molar ratio), and 304.0 parts by mass of diphenyl sulfone were mixed, and the temperature was raised to 180°C while flowing a nitrogen gas having an oxygen concentration of 100 ppm into the system. After adding 77.9 parts by mass (1.050 molar ratio) of potassium carbonate to the obtained mixed solution, the temperature was gradually raised to 290°C, and reaction was further performed at 290°C for 3.5 hours. The polymerization concentration was 42%. Subsequently, the obtained reaction mixture solution was cooled to room temperature to solidify, finely pulverized, and then washed several times by decantation and filtration using warm water and a mixed solvent of acetone and methanol. The obtained solid was heated and dried at 150°C to obtain a polybiphenyl ether sulfone resin of Example 1. Table 1 shows measurement results of the residual diphenyl sulfone amount, the reduced viscosity (RV), and the impact resistance test of the press molded test piece, as well as the oxygen concentration in the nitrogen gas.

An injection molded test piece was prepared by the above-described method using the polybiphenyl ether sulfone resin of Example 1, and an impact resistance test of the injection molded test piece was performed by the above-described method. In addition, a press film was prepared by the above-described method using the polybiphenyl ether sulfone resin of Example 1, and a tensile test of the press film was performed. Table 2 shows measurement results of the impact resistance test of the injection molded test piece and the tensile test of the press film.

[Example 2]

A polybiphenyl ether sulfone resin of Example 2 was obtained under the same conditions as those of Example 1, except that 159.4 parts by mass (1.034 molar ratio) of bis(4-chlorophenyl) sulfone and 307.8 parts by mass of diphenyl sulfone were used, and the reaction time at a polymerization concentration of 42% and 290°C was 8 hours. Table 1 shows measurement results of the residual diphenyl sulfone amount, the reduced viscosity (RV), and the impact resistance test of the press molded test piece, as well as the oxygen concentration in the nitrogen gas. Table 2 shows measurement results of the impact resistance test of the injection molded test piece and the tensile test of the press film.

[Example 3]

A polybiphenyl ether sulfone resin of Example 3 was obtained under the same conditions as those of Example 1, except that 260.8 parts by mass of diphenyl sulfone was used, and the reaction time at a polymerization concentration of 46% and 290°C was 7 hours. Table 1 shows measurement results of the residual diphenyl sulfone amount, the reduced viscosity (RV), and the impact resistance test of the press molded test piece, as well as the oxygen concentration in the nitrogen gas. Table 2 shows measurement results of the impact resistance test of the injection molded test piece and the tensile test of the press film.

[Example 4]

A polybiphenyl ether sulfone resin of Example 4 was obtained under the same conditions as those of Example 1, except that nitrogen gas having an oxygen concentration of 600 ppm was used, 260.8 parts by mass of diphenyl sulfone was used, and the reaction time at a polymerization concentration of 46% and 290°C was 7 hours. Table 1 shows measurement results of the heavy residual diphenyl sulfone amount, the reduced viscosity (RV), and the impact resistance test of the press molded test piece, as well as the oxygen concentration in the nitrogen gas. Table 2 shows measurement results of the impact resistance test of the injection molded test piece and the tensile test of the press film.

[Comparative Example 1]

In a polymerization tank equipped with a stirrer, a nitrogen introduction tube, a thermometer, and a capacitor with a receiver at the tip, 100.0 parts by mass (1 molar ratio) of biphenol, 157.3 parts by mass (1.020 molar ratio) of bis(4-chlorophenyl) sulfone, and 260.8 parts by mass of diphenyl sulfone were mixed, and the temperature was raised to 180°C while flowing nitrogen gas having an oxygen concentration of 2300 ppm in the system. After adding 77.9 parts by mass (1.050 molar ratio) of potassium carbonate to the obtained mixed solution, the temperature was gradually raised

to 290°C, and the reaction was further performed at 290°C for 6 hours. The polymerization concentration was 46%. Subsequently, the obtained reaction mixture solution was cooled to room temperature to solidify, finely pulverized, and then washed several times by decantation and filtration using warm water and a mixed solvent of acetone and methanol. The obtained solid was heated and dried at 150°C to obtain a polybiphenyl ether sulfone resin of Comparative Example 1. Table 1 shows measurement results of the residual diphenyl sulfone amount, the reduced viscosity (RV), and the impact resistance test of the press molded test piece, as well as the oxygen concentration in the nitrogen gas. Table 2 shows measurement results of the impact resistance test of the injection molded test piece and the tensile test of the press film.

[Comparative Example 2]

In a polymerization tank equipped with a stirrer, a nitrogen introduction tube, a thermometer, and a capacitor with a receiver at the tip, 100.0 parts by mass (1 molar ratio) of biphenol, 159.0 parts by mass (1.031 molar ratio) of bis(4-chlorophenyl) sulfone, and 308.5 parts by mass of diphenyl sulfone were mixed, and the temperature was raised to 180°C while flowing nitrogen gas having an oxygen concentration of 6,400 ppm in the system. After adding 76.4 parts by mass (1.029 molar ratio) of potassium carbonate to the obtained mixed solution, the temperature was gradually raised to 290°C, and the reaction was further performed at 290°C for 4.5 hours. The polymerization concentration was 42%. Subsequently, the obtained reaction mixture solution was cooled to room temperature to solidify, finely pulverized, and then washed several times by decantation and filtration using warm water and a mixed solvent of acetone and methanol. The obtained solid was heated and dried at 150°C to obtain a polybiphenyl ether sulfone resin of Comparative Example 2. Table 1 shows measurement results of the residual diphenyl sulfone amount, the reduced viscosity (RV), and the impact resistance test of the press molded test piece, as well as the oxygen concentration in the nitrogen gas.

[Comparative Example 3]

A polybiphenyl ether sulfone resin of Comparative Example 3 was obtained under the same conditions as those of Comparative Example 2, except that 308.9 parts by mass of diphenyl sulfone and 76.1 parts by mass (1.025 molar ratio) of potassium carbonate were used, and the reaction time at a polymerization concentration of 42% and 290°C was 4 hours. Table 1 shows measurement results of the residual diphenyl sulfone amount, the reduced viscosity (RV), and the impact resistance test of the press molded test piece, as well as the oxygen concentration in the nitrogen gas.

[Table 1]

| | Oxygen concentration in nitrogen gas [ppm] | Remaining diphenyl sulfone amount [ppm] | Reduced viscosity (RV) | Impact resistance test of press molded test piece | |
|---|---|---|---|---|---|
| | | | | Izod impact value before thermal annealing [J/m] | Izod impact value after thermal annealing (180°C, 48 h) [J/m] |
| Example 1 | 100 | 1400 | 0.52 | 1195 | 1023 |
| Example 2 | 100 | 1500 | 0.48 | 1257 | 993 |
| Example 3 | 100 | 1300 | 0.48 | 999 | 1065 |
| Example 4 | 600 | 1700 | 0.48 | 1111 | 1145 |
| Comparative Example 1 | 2300 | 1000 | 0.49 | 1266 | 722 |
| Comparative Example 2 | 6400 | 80 | 0.50 | 1205 | 256 |
| Comparative Example 3 | 6400 | 50 | 0.49 | 1204 | 213 |

[Table 2]

| | Impact resistance test of injection molded test piece | | | Tensile test of press film | |
|---|---|---|---|---|---|
| | Izod impact value before thermal annealing [J/m] | Izod impact value after thermal annealing (180°C, 48 h) [J/m] | Izod impact value after thermal annealing (180°C, 72 h) [J/m] | Tensile elastic modulus [GPa] | Tensile strength [MPa] |
| Example 1 | 586 | 546 (brittle break 0/5) | 455 (brittle break 1/5) | 2.3 | 74 |
| Example 2 | 630 | 423 (brittle break 2/5) | 251 (brittle break 4/5) | 2.3 | 80 |
| Example 3 | 609 | 348 (brittle break 3/5) | - | 2.3 | 77 |
| Example 4 | 577 | 565 (brittle break 0/5) | 510 (brittle break 1/5) | 2.3 | 71 |
| Comparative Example 1 | 553 | 151 (brittle break 5/5) | - | 1.3 | 78 |

The polybiphenyl ether sulfone resins of comparative examples, produced under the condition that the oxygen concentration in the nitrogen gas introduced into the nitrogen atmosphere exceeded 1,000 ppm in terms of volume with respect to the introduced gas, had the same impact resistance as that of the polybiphenyl ether sulfone resin of the examples, in both the press molded test piece and the injection molded test piece, for the test piece before thermal annealing, but had inferior impact resistance to that of the polybiphenyl ether sulfone resin of the examples, for the test piece after thermal annealing, and the impact resistance was acknowledged to significantly deteriorate after thermal annealing and the tensile elastic modulus when molded into a film was inferior.

On the other hand, in the polybiphenyl ether sulfone resins of Examples 1 to 4, produced under the condition that the oxygen concentration in the nitrogen gas introduced into the nitrogen atmosphere was 1,000 ppm or less in terms of volume with respect to the introduced gas, the Izod impact value of the test piece with a notch after being subjected to heat treatment at 180°C for 48 hours when the test piece with a notch was molded by injection molding, measured in accordance with ASTM D256, was 300 J/m or more, and the tensile elastic modulus when the polybiphenyl ether sulfone resin was molded into a film was extraordinarily excellent.

[Industrial Applicability]

The molded article obtained from the polybiphenyl ether sulfone resin of the present invention has excellent impact resistance and little change in impact resistance before and after thermal annealing, that is, resistant to thermal aging, and has excellent tensile elastic modulus when molded into a film. Such a molded article can be expected to be used in a wide range of applications such as electric/electronic materials, automobile parts, medical materials, heat-resistant paints, separation membranes, and resin joints, and in particular, in various applications estimated to be used in a high-temperature atmosphere.

## Claims

**1.** A polybiphenyl ether sulfone resin substantially composed of a repeating structure of the following Formula (1),

wherein when the following test piece with a notch is molded by injection molding the polybiphenyl ether sulfone resin, an Izod impact value of the test piece with a notch after being subjected to heat treatment at 180°C for 48 hours, measured in accordance with ASTM D256, is 300 J/m or more,

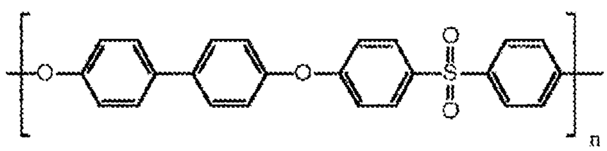

(1)

[in the formula, n represents an integer of 1 or more]
<test piece with a notch>
length: 63.5 ± 2.0 mm

thickness: 3.2 mm
width: 12.6 mm
remaining width: 9.9 mm.

**2.** A method for producing a polybiphenyl ether sulfone resin by a polycondensation reaction between a 4,4'-dihalogenodiphenyl sulfone compound and 4,4'-dihydroxybiphenyl in an aprotic polar solvent under a nitrogen atmosphere, wherein an oxygen concentration in a nitrogen gas introduced into the nitrogen atmosphere is 1,000 ppm or less in terms of volume with respect to the introduced gas.

**3.** A molded article comprising:
the polybiphenyl ether sulfone resin according to Claim 1.

## INTERNATIONAL SEARCH REPORT

International application No. PCT/JP2020/015115

A. CLASSIFICATION OF SUBJECT MATTER
Int.Cl. C08G65/40(2006.01)i, C08G75/23(2006.01)i
FI: C08G65/40, C08G75/23

According to International Patent Classification (IPC) or to both national classification and IPC

B. FIELDS SEARCHED

Minimum documentation searched (classification system followed by classification symbols)
Int.Cl. C08G65/40, C08G75/23

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2006-232974 A (TOYOBO CO., LTD.) 07.09.2006 (2006-09-07), claims, paragraphs [0025], [0026], [0037], [0038], [0049], example 3 | 1-3 |
| A | JP 5-301955 A (UBE INDUSTRIES, LTD.) 16.11.1993 (1993-11-16) | 1-3 |
| A | JP 62-179527 A (HERCULES INCORPORATED) 06.08.1987 (1987-08-06) | 1-3 |
| E, A | WO 2020/066875 A1 (SUMITOMO CHEMICAL CO., LTD.) 02.04.2020 (2020-04-02) | 1-3 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>08.06.2020 | Date of mailing of the international search report<br>16.06.2020 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2020/015115

| | | |
|---|---|---|
| JP 2006-232974 A | 07.09.2006 | (Family: none) |
| JP 5-301955 A | 16.11.1993 | (Family: none) |
| JP 62-179527 A | 06.08.1987 | JP 6-228303 A<br>JP 6-228304 A<br>US 4789722 A<br>EP 233966 A1<br>ES 552138 A<br>ES 557525 A<br>ES 557526 A<br>CA 1250996 A<br>KR 10-1992-0002704 B |
| WO 2020/066875 A1 | 02.04.2020 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019071412 A
- JP 2004107606 A
- JP 2004263154 A
- JP 2002525406 W